# EUROPÄISCHE PATENTSCHRIFT

(11) **EP 4 123 295 B1**
(45) Veröffentlichungstag und Bekanntmachung des Hinweises auf die Patenterteilung: **01.01.2025**
(21) Anmeldenummer: 22186155.2
(22) Anmeldetag: 21.07.2022
(51) Int. Cl.: G01N 21/88, B29C 70/38, B29C 70/54, G01N 21/84

(54) **VERFAHREN ZUM ERKENNEN VON FEHLSTELLEN AUF EINER FASERMATERIALOBERFLÄCHE SOWIE VERFAHREN UND ANLAGE ZUM ABLEGEN VON FASERMATERIAL**
METHOD FOR DETECTING DEFECTS ON A SURFACE OF A FIBROUS MATERIAL AND METHOD AND SYSTEM FOR DEPOSITING FIBROUS MATERIAL
PROCÉDÉ DE DÉTECTION DE DÉFAUTS À LA SURFACE D'UN MATÉRIAU FIBREUX, AINSI QUE PROCÉDÉ ET INSTALLATION DE DÉPÔT D'UN MATÉRIAU FIBREUX

(30) Priorität: 21.07.2021 DE 102021118876
(43) Veröffentlichungstag der Anmeldung: 25.01.2023
(73) Patentinhaber: Deutsches Zentrum für Luft- und Raumfahrt e.V., 53227 Bonn-Oberkassel (DE)
(72) Erfinder: Meister, Sebastian, 21680 Stade (DE)
(74) Vertreter: Gramm, Lins & Partner Patent- und Rechtsanwälte PartGmbB

(56) Entgegenhaltungen:
- EP-A1- 3 754 605
- MEISTER SEBASTIAN ET AL: "Synthetic image data augmentation for fibre layup inspection processes: Techniques to enhance the data set", JOURNAL OF INTELLIGENT MANUFACTURING, SPRINGER US, NEW YORK, vol. 32, no. 6, 2 February 2021 (2021-02-02), pages 1767 - 1789, XP037495336, ISSN: 0956-5515, [retrieved on 20210202], DOI: 10.1007/S10845-021-01738-7
- SACCO CHRISTOPHER ET AL: "Machine learning in composites manufacturing: A case study of Automated Fiber Placement inspection", COMPOSITE STRUCTURES, vol. 250, 13 June 2020 (2020-06-13), GB, pages 112514, XP055894067, ISSN: 0263-8223, DOI: 10.1016/j.compstruct.2020.112514

## Beschreibung

Die Erfindung betrifft ein Verfahren zum Erkennen von Fehlstellen auf einer Fasermaterialoberfläche eines Fasermaterials, welches Bestandteil eines Faserverbundwerkstoffes aufweisend das Fasermaterial und ein das Fasermaterial einbettendes Matrixmaterial ist, durch eines optischen Detektionssystem.

Die Erfindung betrifft ebenso ein Verfahren zum Ablegen von Fasermaterial eines Faserverbundwerkstoffes aufweisend das Fasermaterial und ein das Fasermaterial einbettendes Matrixmaterial auf eine Werkzeugoberfläche, wobei mittels eines optischen Detektionssystems eine Fasermaterialoberfläche des abgelegten Fasermaterials erfasst und Fehlstellen an dem abgelegten Fasermaterial in Abhängigkeit von der erfassten Fasermaterialoberfläche erkannt und die Art der Fehlstelle klassifiziert werden. Ebenso betrifft die Erfindung eine Anlage hierzu.

Aufgrund der gewichtsspezifischen Festigkeit und Steifigkeit von Faserverbundbauteilen, die aus einem Faserverbundwerkstoff hergestellt werden, sind derartige Bauteile aus der Luft- und Raumfahrt sowie aus vielen weiteren Anwendungsgebieten, wie beispielsweise dem Automobilbereich, heutzutage kaum mehr wegzudenken. Bei der Herstellung eines Faserverbundbauteils wird dabei ein das Fasermaterial einbettendes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial imprägniert wird. Dies geschieht in der Regel aufgrund einer Druckdifferenz zwischen dem Matrixmaterial und dem Fasermaterial, indem beispielsweise das Fasermaterial mittels einer Vakuumpumpe evakuiert wird. Im Gegensatz hierzu sind auch Faserverbundwerkstoffe bekannt, bei denen das Fasermaterial mit dem Matrixmaterial bereits vorimprägniert ist (sogenannte Prepregs).

Vor dem Aushärten des Matrixmaterials wird in der Regel das Fasermaterial in ein Formwerkzeug eingebracht, das mit seiner formgebenden Werkzeugoberfläche die spätere Bauteilform nachbildet. Dabei können sowohl trockene als auch vorimprägnierte Fasermaterialien in das Formwerkzeug abgelegt bzw. eingebracht werden. Zur Herstellung von großskaligen Strukturbauteilen, wie beispielsweise Flügelschalen von Verkehrsflugzeugen oder Rotorblätter von Windkraftanlagen, werden zur Optimierung des Ablegeverfahrens automatisierte Faserablegeprozesse verwendet, bei denen mithilfe einer Fertigungsanlage und mindestens einem Faserlegekopf ein dem Faserlegekopf zugeführtes quasiendloses Fasermaterial auf dem Werkzeug abgelegt wird. Bei der sogenannten Fiber Placement Technologie werden beispielsweise vorimprägnierte Fasermaterialien bahnweise auf dem Formwerkzeug mithilfe eines derartigen Faserlegekopfes abgelegt. Der Faserlegekopf ist dabei an einem Roboter angeordnet und kann gegenüber dem Formwerkzeug relativ verfahren bzw. bewegt werden. Hierdurch können die einzelnen Faserbahnen auf der Werkzeugoberfläche zuerst bahnweise und dann lagenweise abgelegt werden. Bei der Fiber Placement Technologie werden dabei gleichzeitig mehrere, meist 8, 16 oder 32 schmale Materialstreifen, sogenannte Tows, auf dem Werkzeug abgelegt. Im Gegensatz hierzu werden bei der Fiber Tape Laying Technologie meist breite Faserbahnen, auch Tapes genannt (in der Regel 150 mm, 300 mm oder 600 mm breit mit einer Dicke von wenigen Zehntel Millimeter), mithilfe des Faserlegekopfes auf dem Formwerkzeug abgelegt.

Eine solche automatisierte Faserlegeanlage ist beispielsweise aus der DE 10 2010 015 027 B1 bekannt, bei der auf einem umlaufenden Schienensystem mehrere Roboter geführt werden, die jeweils einen Ablegekopf als Endeffektor haben. Mittels einer Faserzuführung werden den Ablegeköpfen kontinuierlich Fasermaterial aus einem Fasermagazin zugeführt, während die einzelnen Roboter mit ihren Ablegeköpfen das ihnen zugeführte Fasermaterial auf einem in der Mitte des umlaufenden Schienensystems vorgesehenen Formwerkzeug ablegen. Mithilfe der Faserlegeköpfe werden somit in dem Formwerkzeug sogenannte Faserlaminate, auch Faserpreformen genannt, hergestellt, bei denen der Prozess des Aushärtens des Matrixmaterials noch nicht stattgefunden hat. Derartige Faserlaminate (auch Faserpreforms genannt) bilden somit das Bauteil in einem Rohzustand vor dem Aushärten des Matrixmaterials ab. Dabei können trockene Fasermaterialen abgelegt werden, die zu einem späteren Zeitpunkt mit einem Matrixmaterial infundiert werden. Hierfür wird ein Vakuumaufbau erstellt, unter dem die trockene Faserpreform eingeschlossen ist, wobei anschließend die trockene Faserpreform evakuiert wird. Denkbar ist aber auch, dass bereits vorimprägnierte Fasermaterialen abgelegt werden, so dass ein Infundieren von Matrixmaterial entfallen kann.

Faserlaminate bzw. Faserpreformen für großskaligen Strukturbauteilen, wie beispielsweise Flügel oder Rotorblätter, bestehen nicht selten aus vielen Einzellagen, die je nach Anwendungsgebiet des Bauteils auch mehr als 100 Lagen umfassen können. Zur Gewährleistung einer hohen Bauteilqualität muss die Anzahl auftretender Prozessfehler bei der Ablage des Fasermaterials minimiert bzw. gänzlich verhindert werden. Das Auftreten von Prozessfehlern bzw. Fertigungsabweichungen mit großem negativen Einfluss auf die Festigkeit der Bauteilstruktur muss nach Möglichkeit vollständig im Prozess erkannt und wünschenswerter Weise auch unterbunden werden.

In der Praxis hat sich hierfür oftmals die manuelle Inspektion der Faserlaminate bzw. der Einzellagen etabliert. Je nach Bauteilgröße, Mitarbeiterverfügbarkeit und Fehlerhäufigkeit innerhalb einer Einzellagen werden im Mittel etwa 15 bis 30 Minuten benötigt, die Ablage einer einzigen Faserlage zu untersuchen. Da jedoch die Ablage einer einzelnen Faserlage in der Regel deutlich schneller mithilfe automatisierter Faserlegeanlagen durchgeführt werden kann, wird durch die manuelle Inspektion die Anlageneffizienz deutlich herabgesetzt. So werden bei der Herstellung von Flügelschalen für Kurzstreckenflugzeuge bis zu 400 Einzellagen benötigt, woraus sich aufgrund der manuellen Inspektion ein Anlagenstillstand von 6000 bis 12.000 Minuten pro Bauteil ergibt.

Ebenso ist die Inspektion durch einen geschulten Mitarbeiter stark vom Erfahrungsgrad abhängig und darüber hinaus nicht in dem Maße qualitativ ausreichend, wie es die Fertigungstoleranzen eigentlich erfordern. Als Beispiel ist ein zulässiger Abstand zwischen 2 Materialbahnen von 1 mm genannt, der qualitativ nur unter Verwendung von Hilfsmitteln und dies auch nur stichpunktartig untersucht werden kann.

Aus diesen Gründen ist eine automatisierte Untersuchung abgelegter Faserlagen zur Erkennung von Ablegefehlern wünschenswert, um sowohl qualitativ als auch quantitativ das Erkennen von Oberflächenfehlern abgelegter Fasermaterialien zu verbessern.

Aus der DE 10 2013 104 546 A1 ist ein Verfahren zum Erkennen von Fehlstellen von auf einer Werkzeugoberfläche abgelegten Faserhalbzeugen bekannt, wobei mithilfe eines Lichtprojektionsverfahrens, bei dem die Oberfläche mit Licht einer Lichtquelle aus einer ersten Richtung beleuchtet und das von der Oberfläche reflektierte Licht aus einer anderen, zweiten Richtung mit einer Kamera aufgenommen wird, ein Höhenprofil der Fasermaterialoberfläche in Abhängigkeit von den aufgenommenen Bilddaten der Kamera erzeugt wird. Anhand dieses Höhenprofils können nun Fehlstellen durch eine Bildauswertung in der Fasermaterialoberfläche erkannt werden.

Aus der DE 10 2013 112 260 A1 ist ebenfalls ein Verfahren zum Erkennen von Fehlstellen mithilfe eines Lichtprojektionsverfahrens bekannt, wobei hierbei die Fasermaterialoberfläche zusätzlich zu dem Licht der Lichtquelle des Lichtprojektionsverfahrens mittels einer Beleuchtungseinheit beleuchtet wird und anschließend zusätzlich zu dem Höhenprofil die Fehlstellen auch in Abhängigkeit einer Intensitätsverteilung des reflektierten Lichtes der Beleuchtungseinheit ermittelt werden.

Weiterhin ist aus der DE 10 2013 104 545 A1 ein Verfahren zum Erkennen von Fehlstellen mithilfe eines Lichtprojektionsverfahrens bekannt, wobei hierbei zusätzlich zu der Ermittlung des Höhenprofils die Werkzeugoberfläche oder die abgelegten Fasermaterialien temperiert und anschließend mit einer Thermokamera aufgenommen werden. Basierend auf den Thermographiebildern der Thermographiekamera sowie dem zugrunde liegenden Höhenprofil aus dem Lichtprojektionsverfahren können nun Fehlstellen auf der Fasermaterialoberfläche erkannt werden.

Die oben beispielhaft beschriebenen Qualitätssicherungssysteme, mit denen sich qualitätsbezogene Materialeigenschaften von Fasermaterialien eines Faserverbundwerkstoffes bei der Herstellung eines Faserverbundbauteils ermitteln lassen, basieren grundsätzlich auf der Idee, die Fasermaterialoberfläche mithilfe eines Laserlichtschnittsensors zu erfassen und ein Höhenprofil (Tiefenbild, dargestellt meist in Falschfarben) des abgelegten Fasermaterial zu erstellen, aus dem dann qualitätsbezogene Materialeigenschaft ermittelt werden können.

Die betrachteten Qualitätssicherungssysteme nutzen einzelne, alleinarbeitende Algorithmen und Lernverfahren, welche oftmals schwer nachvollziehbare Entscheidungsprozesse und Berechnungen durchführen. Nach empirischer Betrachtung sind diese nicht nachvollziehbaren Entscheidungen oft sehr gut. Allerdings muss für eine notwendige Zertifizierung des Erkennungsverfahrens die Robustheit, Nachvollziehbarkeit und Prozesssicherheit nachgewiesen werden, was durch eine alleinige empirische Betrachtung in der Regel nicht gewährleistet werden kann.

Die EP 3 754 605 A1 offenbart ebenfalls ein Verfahren zum Ermitteln von Fehlstellen auf einer Fasermaterialoberfläche eines abgelegten Fasermaterials eines Faserverbundwerkstoffes. Hierbei wird die Oberfläche des Fasermaterials mithilfe eines Lichtschnittsensors erfasst und ein entsprechendes Höhenprofil hieraus berechnet. Außerdem werden zweite und dritte Bilddaten durch verschiedene optische Sensoren aufgenommen. Dabei lassen sich basierend auf maschinellen Lernverfahren Fehlstellen erkennen, indem die aufgenommenen Bilddaten in die maschinellen Lernverfahren als Eingangsdaten eingegeben werden.

Es ist demnach Aufgabe der vorliegenden Erfindung ein verbessertes Verfahren zum Erkennen von Fehlstellen auf einer Fasermaterialoberfläche abgelegter Fasermaterialien anzugeben, das Robust und Prozesssicher Fehlstellen erkennen kann.

Die Aufgabe wird mit dem Verfahren gemäß Anspruch 1 erfindungsgemäß gelöst. Vorteilhafte Ausgestaltungen finden sich in den entsprechenden Unteransprüchen.

Gemäß Anspruch 1 wird ein Verfahren zum Erkennen von Fehlstellen auf einer Fasermaterialoberfläche eines Fasermaterials vorgeschlagen, wobei das Fasermaterial Bestandteil eines Faserverbundwerkstoffes aufweisend das Fasermaterial und ein das Fasermaterial einbettendes Matrixmaterial ist. Das erfindungsgemäße Verfahren umfasst dabei die folgenden Schritte:
- Erfassen der Fasermaterialoberfläche des abgelegten Fasermaterials mittels mindestens eines optischen Sensors des optischen Detektionssystems und Generieren von digitalen Bilddaten, welche die erfasste Fasermaterialoberfläche enthalten;
- Durchführen eines ersten maschinellen Klassifizierungsverfahrens basierend auf den generierten digitalen Bilddaten mittels einer elektronischen Datenverarbeitungsanlage des optischen Detektionssystems, wobei das erste maschinelle Klassifizierungsverfahren in den die Fasermaterialoberfläche abbildenden digitalen Bilddaten Fehlstellen erkennt und die Art der Fehlstelle als Erkennungsergebnis klassifiziert;
- Durchführen wenigstens eines von dem ersten maschinellen Klassifizierungsverfahren verschiedenen zweiten maschinellen Klassifizierungsverfahrens basierend auf denselben generierten digitalen Bilddaten mittels der elektronischen Datenverarbeitungsanlage des optischen Detektionssystems, wobei das zweite maschinelle Klassifizierungsverfahren in den die Fasermaterialoberfläche abbildenden digitalen Bilddaten Fehlstellen erkennt und die Art der Fehlstelle als Erkennungsergebnis klassifiziert;
- Vergleichen der Erkennungsergebnisse der Fehlstellenerkennung des ersten maschinellen Klassifizierungsverfahrens und des zweiten maschinellen Klassifizierungsverfahrens mittels der elektronischen Datenverarbeitungsanlage; und
- Erkennen einer Fehlstelle und Klassifizieren der Art der Fehlstelle auf der Fasermaterialoberfläche des abgelegten Fasermaterials in Abhängigkeit von dem Vergleich der Erkennungsergebnisse mittels der elektronischen Datenverarbeitungsanlage.

Es wird demnach vorgeschlagen, basierend auf denselben digitalen Bilddaten, die von dem optischen Sensor des optischen Detektionssystems erfasst und generiert wurden, zwei voneinander verschiedene maschinelle Klassifizierungsverfahren durchzuführen, die im Wesentlichen parallel durchgeführt werden und die als Erkennungsergebnis die Art der erkannten Fehlstelle klassifizieren. Das erste maschinelle Klassifizierungsverfahren erzeugt dabei ein erstes Erkennungsergebnis, während das zweite maschinelle Klassifizierungsverfahren ein zweites Erkennungsergebnis erzeugt. Beide Erkennungsergebnisse werden nun in einem darauf folgenden Schritte miteinander verglichen, sodass festgestellt werden kann, wie groß die Abweichung zwischen den beiden denn Erkennungsergebnisse ist. Überschreitet die Abweichung zwischen den beiden Erkennungsergebnissen gewisse Schwellwerte, so muss von einer fehlerhaften Klassifizierung ausgegangen werden. Andernfalls kann das Erkennungsergebnis als valide angesehen werden. Das Erkennungsergebnis kann dabei in Form eines Wahrscheinlichkeitswertes angegeben werden, der angibt, mit welcher Wahrscheinlichkeit die Klassifizierung für diesen Fehler korrekt ist. Unter einem Erkennungsergebnis der maschinellen Klassifizierungsverfahren wird dabei nicht nur das Endergebnis der Klassifizierung verstanden, sondern auch Zwischenergebnisse und Informationen über Zwischenberechnungen bzw. Metadaten. So können auch interne Berechnungsschritte und interne Zwischenergebnisse beider Klassifizierungsverfahren miteinander verglichen werden bzw. miteinander abgeglichen werden, um so die korrekte Arbeitsweise beider Klassifizierungsverfahren zu verifizieren. Solche internen Zwischenergebnisse und Metainformationen können dabei zur Bewertung des Klassifikationsablaufes genutzt werden und bieten durch Vergleich die Möglichkeit, den korrekten Klassifikationsablauf zu verifizieren.

Die maschinellen Klassifizierungsverfahren sind dabei Verfahren aus dem Bereich des maschinellen Lernens, wobei jedes der maschinellen Klassifizierungsverfahren mithilfe von Trainingsdaten entsprechend gelernt wurde, sodass basierend auf den generierten digitalen Bilddaten des optischen Sensors eine Fehlererkennung und ein Klassifizierung durchgeführt werden kann.

Dabei ist es denkbar, dass die maschinellen Klassifizierungsverfahren lediglich einen Fehler klassifizieren, der zuvor bereits durch andere Verfahren erkannt wurde. In diesem Fall wird durch die Klassifizierung mit dem maschinellen Klassifizierungsverfahren die vorherige Fehlererkennung verifiziert, sodass auch hier von einer Erkennung einer Fehlstelle gesprochen werden kann. Denkbar ist aber auch, dass die maschinellen Klassifizierungsverfahren sowohl eine Fehlstelle auf der Fasermaterialoberfläche Erkennen und die erkannte Fehlstelle entsprechend klassifizieren.

Mit der vorliegenden Erfindung wird es möglich, dieselbe Klassifikationsaufgabe von unterschiedlichen maschinellen Klassifizierungsverfahren durchzuführen und deren Ergebnis miteinander auf Gleichheit zu prüfen, sodass eine robuste und prozesssichere Erkennung und Klassifizierung realisiert werden kann.

Gemäß einer Ausführungsform ist vorgesehen, dass das erste maschinelle Klassifizierungsverfahren ein künstliches neuronales Netz ist, das in einer Trainingsphase eine Korrelation zwischen in Trainingsbildern enthaltenen Abbildungen einer Fasermaterialoberfläche und Fehlstellen auf der Fasermaterialoberfläche erlernt hat und das in einer Arbeitsphase in Abhängigkeit von digitalen Bilddaten als Eingabe in das künstliche neuronale Netz eine Fehlstelle erkennt und die Art der Fehlstelle als Ausgabe klassifiziert. Die Entscheidung des neuronale Netzes kann dann durch das zweite maschinelle Klassifizierungsverfahren, welches gerade kein künstliches neuronales Netz darstellt, geprüft und verifiziert werden.

Gemäß einer Ausführungsform ist vorgesehen, dass das künstliche neuronale Netz ein convolutional neuronales Netz ist.

Gemäß einer Ausführungsform ist vorgesehen, dass die von dem optischen Sensor generierten digitalen Bilddaten hinsichtlich der Anzahl der Pixel für die Eingabe in das künstliche neuronale Netz verkleinert werden.

Gemäß einer Ausführungsform ist vorgesehen, dass die digitalen Bilddaten auf einer Größe von 128 Pixel x 128 Pixel verkleinert werden.

Gemäß einer Ausführungsform ist vorgesehen, dass das zweite maschinelle Klassifizierungsverfahren ein Stützvektorverfahren ist, das in einer Trainingsphase eine Klassifizierung zwischen in Trainingsbildern enthaltenen Abbildungen einer Fasermaterialoberfläche und Fehlstellen auf der Fasermaterialoberfläche erlernt hat und das in einer Arbeitsphase in Abhängigkeit von digitalen Bilddaten als Eingabe in das Stützvektorverfahren eine Fehlstelle erkennt und die Art der Fehlstelle als Ausgabe klassifiziert. Ein Stützvektorverfahren, auch Support Vector Machine genannt, unterteilt Merkmale so in spezielle Klassen ein, dass ein möglichst großer Abschnitt um die Klassengrenzen herum freibleibt, wodurch eine rein mathematische Mustererkennung umgesetzt werden kann.

Gemäß einer Ausführungsform ist vorgesehen, dass bei dem zweiten Klassifizierungsverfahren zunächst eine Merkmalsextraktion durchgeführt wird, bei der Bildmerkmale aus den generierten digitalen Bilddaten extrahiert werden, wobei diese Bildmerkmale als Eingabe in das Stützvektorverfahren eingegeben werden, um eine Fehlstelle zu erkennen und die Art der Fehlstelle als Ausgabe zu klassifizieren. In diesem Fall führt das zweite maschinelle Klassifizierungsverfahren zunächst eine Merkmalsextraktion durch, um Bildmerkmale in den digitalen Bilddaten zu extrahieren, wobei diese Bildmerkmale dann in den eigentlichen Klassifikators des Stützvektorverfahren eingegeben werden.

Gemäß einer Ausführungsform ist vorgesehen, dass als Bildmerkmale ein Histogram of Oriented Gradients berechnet wird.

Gemäß einer Ausführungsform ist vorgesehen, dass eine Falte in dem Fasermaterial, eine Verdrehung des Fasermaterials, eine Überlappung benachbarter Fasermaterialien, Fremdkörper auf oder in der Fasermaterialoberfläche, eine Lücke zwischen benachbarten Fasermaterialien, Lufteinschlüsse, Materialablösungen des Fasermaterials von der darunterliegenden Schicht, Materialfehler des Fasermaterials und/oder Schnittfehler als Fehlstellen erkannt und klassifiziert werden.

Die Aufgabe wird im Übrigen auch mit dem Verfahren zum Ablegen von Fasermaterial gemäß Anspruch 10 erfindungsgemäß gelöst.

Die Aufgabe wird im Übrigen auch mit der Anlage zum Ablegen von Fasermaterial gemäß Anspruch 11 erfindungsgemäß gelöst.

Ein Aspekt der vorliegenden Erfindung ist des Weiteren eine Vorrichtung zum Erkennen von Fehlstellen auf einer Fasermaterialoberfläche eines Fasermaterials, welches Bestandteil eines Faserverbundwerkstoffes aufweisend das Fasermaterial und ein das Fasermaterial einbettendes Matrixmaterial ist, wobei die Vorrichtung ein optischen Detektionssystem umfasst. Das optische Detektionssystem hat einen optischen Sensor zur optischen Aufnahme der Fasermaterialoberfläche sowie eine elektronische Datenverarbeitungsanlage, die zur Durchführung der mit der Datenverarbeitungsanlage gekennzeichneten Verfahrensschritte ausgebildet ist. Dies umfasst insbesondere das Durchführen eines ersten maschinellen Klassifizierungsverfahrens basierend auf den generierten digitalen Bilddaten mittels einer elektronischen Datenverarbeitungsanlage des optischen Detektionssystems, wobei das erste maschinelle Klassifizierungsverfahren in den die Fasermaterialoberfläche abbildenden digitalen Bilddaten Fehlstellen erkennt und die Art der Fehlstelle als Erkennungsergebnis klassifiziert, das Durchführen wenigstens eines von dem ersten maschinellen Klassifizierungsverfahren verschiedenen zweiten maschinellen Klassifizierungsverfahrens basierend auf denselben generierten digitalen Bilddaten mittels der elektronischen Datenverarbeitungsanlage des optischen Detektionssystems, wobei das zweite maschinelle Klassifizierungsverfahren in den die Fasermaterialoberfläche abbildenden digitalen Bilddaten Fehlstellen erkennt und die Art der Fehlstelle als Erkennungsergebnis klassifiziert, das Vergleichen der Erkennungsergebnisse der Fehlstellenerkennung und/oder Zwischenergebnisse hierzu des ersten maschinellen Klassifizierungsverfahrens und des zweiten maschinellen Klassifizierungsverfahrens mittels der elektronischen Datenverarbeitungsanlage, und das Erkennen einer Fehlstelle und Klassifizieren der Art der Fehlstelle auf der Fasermaterialoberfläche des abgelegten Fasermaterials in Abhängigkeit von dem Vergleich der Erkennungsergebnisse mittels der elektronischen Datenverarbeitungsanlage.

Die Erfindung wird anhand der beigefügten Figuren beispielhaft näher erläutert. Es zeigen:
- Figur 1:: schematische Darstellung eines Ablegekopfes mit einem Laserlichtschnittsensor im Nachlauf;
- Figur 2:: schematische Darstellung des Verfahrensablaufes.

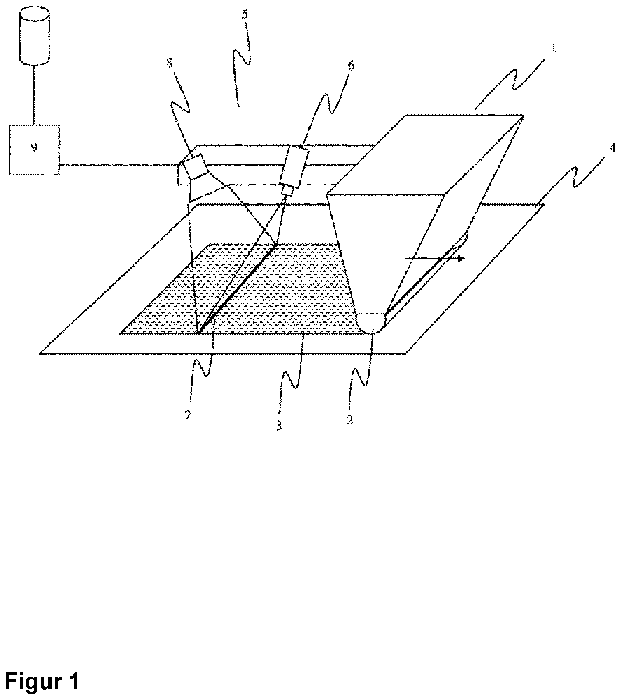

Figur 1 zeigt das aus dem Stand der Technik bekannte Verfahren zur Aufnahme eines Höhenprofils mittels eines Laserlichtschnittsensors 5 im Nachlauf eines Ablegekopfes 1, der am unteren Ende eine Anpressrolle 2 aufweist, mit der ein flächiges Faserhalbzeug 3 auf einer formgebenden Werkzeugoberfläche 4 abgelegt werden soll. Die abzulegenden Faserhalbzeuge können dabei trockene Rovings bzw. Tows sein, aber auch vorimprägnierte Prepregs.

Im Nachlauf des Ablegekopfes 1 ist an dem Ablegekopf 1 ein Laserlichtschnittsensor 5 angeordnet. Mit Hilfe einer Laserlichtquelle 6 wird eine Laserlichtlinie 7 auf den bereits abgelegten Teil des Faserhalbzeuges 3 projiziert. Die Projektion des Laserlichtes in Form einer Laserlichtlinie 7 auf das Faserhalbzeug 3 erfolgt dabei aus einer ersten Richtung.

Der Laserlichtschnittsensor 5 weist des Weiteren eine Kamera 8 auf, die in einem definierten Abstand zu der Laserlichtquelle 6 angeordnet ist und die auf das Faserhalbzeug 3 projizierte Laserlichtlinie 7 aus einer anderen zweiten Richtung unter einem vorgegebenen und definierten Winkel aufnimmt.

Die Kamera 8 des Lichtschnittsensors 5 ist mit einer Bildauswerteeinheit 9 verbunden, die nun in Abhängigkeit der aufgenommenen Bilddaten und dem aus der Laserlichtlinie 7 reflektierten Lichtes ein entsprechendes Höhenprofil ermittelt. Da der Ablegekopf 1 zusammen mit dem Lichtschnittsensor 5 kontinuierlich auf der Werkzeugoberfläche 4 verfahren wird, ergeben sich eine Vielzahl von Bilddaten. Die Bilddaten und/oder die aus den Bilddaten ermittelten Höhenprofile pro Zeitpunkt lassen sich dann in einer Datenbank abspeichern, so dass sich ein vollständiges dreidimensionales Höhenprofil bzw. Oberflächenstruktur der Oberfläche des Faserhalbzeuges 3 ergibt.

Darüber hinaus lassen sich mit Hilfe der Bildauswerteeinheit 9 aus den Höhenprofilen die entsprechenden charakteristischen Fehlstellen ableiten, so dass während des Ablegens der Faserhalbzeuge 3 auf der Werkzeugoberfläche 4 sich gleich die Qualitätssicherung des Ablegeprozesses in Echtzeit anschließt.

Die Bildauswerteeinheit 9 arbeitet dabei gemäß dem erfindungsgemäßen Verfahren mit zwei voneinander verschiedenen maschinellen Klassifizierungsverfahren, die als Eingabe das von der Bildauswerteeinheit 9 erstellte Höhenprofil in Form eines zweidimensionalen Falschfarbenbildes erhalten.

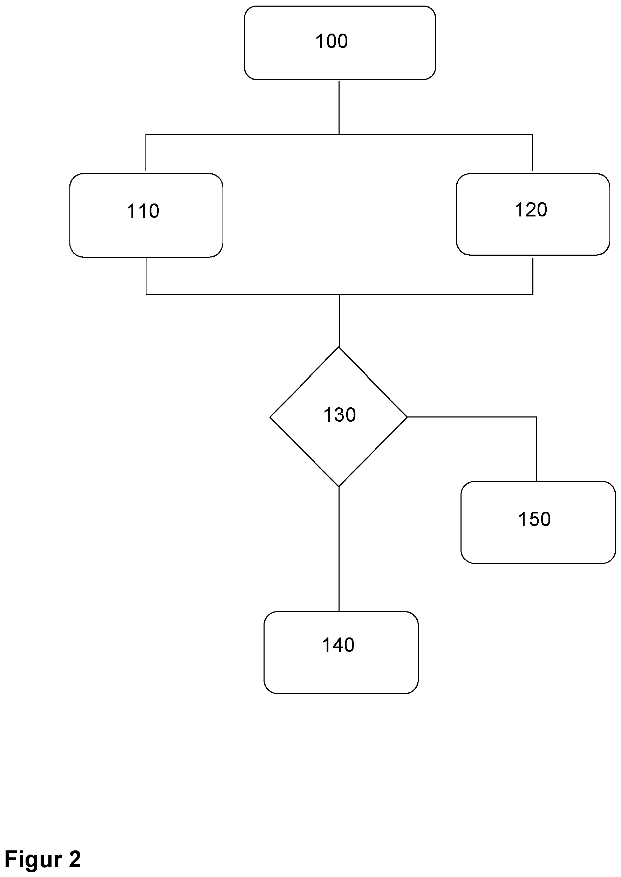

Figur 2 zeigt dabei den diesbezüglichen Verfahrensablauf. Zunächst wird im ersten Schritt 100 das erstellte Höhenprofil in Form eines zweidimensionalen Falschfarbenbildes bereitgestellt, wobei basierend auf diesem Falschfarbenbild eine Vorverarbeitung des Bildes stattfinden kann. Auch ist es denkbar, dass bereits im ersten Schritt 100 eine Fehleranalyse durchgeführt wird, um so gegebenenfalls schon Fehlstellen zu detektieren, ohne zu wissen, welcher Art diese Fehlstellen sind. Anschließend wird das aufbereitete Falschfarbenbild einem ersten maschinellen Klassifizierungsverfahren 110 sowie parallel einem zweiten maschinellen Klassifizierungsverfahren 120 zugeführt. Beide Klassifizierungsverfahren 110 und 120 sind dazu ausgebildet, die Art der Fehlstelle zu klassifizieren. Hierfür wurden beide Klassifizierungsverfahren 110 und 120 zuvor mit Trainingsdaten trainiert, die eine direkte Zuordnung von Falschfarbenbildern zu Fehlstellen und Art der Fehlstelle enthalten.

Anschließend wird im Schritt 130 das Erkennungsergebnis des ersten maschinellen Klassifizierungsverfahrens 110 mit dem Erkennungsergebnis des zweiten maschinellen Klassifizierungsverfahrens 120 verglichen, um so festzustellen, ob bei der Erkennungsergebnisse im Wesentlichen identisch sind. Ist dies der Fall, kann eine korrekte Klassifizierung angenommen werden und im Schritt 140 dann sowohl die Fehlstelle als auch die Art der Fehlstelle ausgegeben werden.

Weichen die Erkennungsergebnisse hingegen stark voneinander ab, so muss angenommen werden, dass die Klassifizierung zumindest durch eine der maschinellen Klassifizierungsverfahren nicht korrekt durchgeführt wurde, sodass einer Ausnahmebehandlung 150 erfolgen muss. Diese kann darin liegen, dass gegebenenfalls die Aufbereitung der Bilddaten verändert wird oder dass gegebenenfalls ein manueller vor Eingriff in den Prozess notwendig wird.

Selbst verständlich ist es denkbar, dass auch mehr als zwei maschinelle Klassifizierungsverfahren durchgeführt werden, wobei jedes dieser Klassifizierungsverfahren sich von den anderen unterscheidet. Dabei ist es denkbar, dass die Unterscheidung lediglich in der Auswahl der Trainingsdaten begründet liegt. Ein konkreter Anwendungsfall für die Kopplung von Support Vector Machine mit einem Künstlichen Neuronalen Netz als redundanter Fehlerklassifikator für den Faserverbundleichtbau, ist die Kombination aus Support Vector Machine mit Radial (linearem) Basis Function (RBF) Kernel und einem Convolutional Neural Network (CNN). Als Eingangsdaten für den SVM Klassifikator werden sogenannte Histogram of Oriented Gradients (HOG) Merkmale genutzt, die aus den generierten Bilddaten extrahiert werden. Als Convolutional Neuronal Network wird ein Design genutzt, welches Eingangsbilder der Größe 128x128 px nutzt. Die Eingangsdaten mit einer typischen Bildgröße von 1000x1000 px müssen vorab auf diese spezielle Bildgröße verkleinert werden. Als Kernel-Größe für die einzelnen Faltungsoperationen des KNN wird ein 3x3 Kernel verwendet. Die Aktivierungsfunktion ist in diesem Beispiel LeakyReLu. Als Dropout Faktor wird 0,5 gewählt. Als Batchsize wird 64 herangezogen. Die angegebenen Werte wurden durch verschiedene Vorversuche speziell für die Fehlerdetektion und -interpretation im AFP Prepreg Legeprozess ermittelt. Ein abweichendes Netzdesign ist hier ebenfalls möglich.

### Bezugszeichenliste

- 1: Ablegekopf
- 2: Anpressrolle
- 3: Faserhalbzeug
- 4: Werkzeugoberfläche
- 5: Laserlichtschnittsensor
- 6: Laserlichtquelle
- 7: Laserlichtlinie
- 8: Kamera
- 9: Bildauswerteeinheit
- 100: Datenaufnahme und Vorverarbeitung
- 110: erstes maschinelles Klassifizierungsverfahren
- 120: zweites maschinelles Klassifizierungsverfahren
- 130: Vergleich der Erkennungsergebnisse
- 140: korrekte Klassifizierung
- 150: fehlerhafte Klassifizierung

## Patentansprüche

1. Verfahren zum Erkennen von Fehlstellen auf einer Fasermaterialoberfläche eines Fasermaterials, welches Bestandteil eines Faserverbundwerkstoffes aufweisend das Fasermaterial und ein das Fasermaterial einbettende Matrixmaterial ist, durch ein optisches Detektionssystem, wobei das Verfahren die folgenden Schritte umfasst:
- Erfassen der Fasermaterialoberfläche des abgelegten Fasermaterials mittels mindestens eines optischen Sensors des optischen Detektionssystems und Generieren von digitalen Bilddaten, welche die erfasste Fasermaterialoberfläche enthalten;
- Durchführen eines ersten maschinellen Klassifizierungsverfahrens (110) basierend auf den generierten digitalen Bilddaten mittels einer elektronischen Datenverarbeitungsanlage des optischen Detektionssystems, wobei das erste maschinelle Klassifizierungsverfahren (110) in den die Fasermaterialoberfläche abbildenden digitalen Bilddaten Fehlstellen erkennt und die Art der Fehlstelle als Erkennungsergebnis klassifiziert;
**gekennzeichnet durch**
- Durchführen wenigstens eines von dem ersten maschinellen Klassifizierungsverfahren (110) verschiedenen zweiten maschinellen Klassifizierungsverfahrens (120) basierend auf denselben generierten digitalen Bilddaten mittels der elektronischen Datenverarbeitungsanlage des optischen Detektionssystems, wobei das zweite maschinelle Klassifizierungsverfahren (120) in den die Fasermaterialoberfläche abbildenden digitalen Bilddaten Fehlstellen erkennt und die Art der Fehlstelle als Erkennungsergebnis klassifiziert;
- Vergleichen der Erkennungsergebnisse (130) der Fehlstellenerkennung und/oder Zwischenergebnisse hierzu des ersten maschinellen Klassifizierungsverfahrens (110) und des zweiten maschinellen Klassifizierungsverfahrens (120) mittels der elektronischen Datenverarbeitungsanlage;
- Erkennen einer Fehlstelle und Klassifizieren der Art der Fehlstelle auf der Fasermaterialoberfläche des abgelegten Fasermaterials in Abhängigkeit von dem Vergleich der Erkennungsergebnisse (130) mittels der elektronischen Datenverarbeitungsanlage.

2. Verfahren nach Anspruch 1, wobei das erste maschinelle Klassifizierungsverfahren (110) ein künstliches neuronales Netz ist, das in einer Trainingsphase eine Korrelation zwischen in Trainingsbildern enthaltenen Abbildungen einer Fasermaterialoberfläche und Fehlstellen auf der Fasermaterialoberfläche erlernt hat und das in einer Arbeitsphase in Abhängigkeit von digitalen Bilddaten als Eingabe in das künstliche neuronale Netz eine Fehlstelle erkennt und die Art der Fehlstelle als Ausgabe klassifiziert.

3. Verfahren nach Anspruch 2, **dadurch gekennzeichnet, dass** das künstliche neuronale Netz ein convolutional neuronales Netz ist.

4. Verfahren nach Anspruch 2 oder 3, **dadurch gekennzeichnet, dass** die von dem optischen Sensor generierten digitalen Bilddaten hinsichtlich der Anzahl der Pixel für die Eingabe in das künstliche neuronale Netz verkleinert werden.

5. Verfahren nach Anspruch 4, **dadurch gekennzeichnet, dass** die digitalen Bilddaten auf einer Größe von 128 Pixel x 128 Pixel verkleinert werden.

6. Verfahren nach einem der vorhergehenden Ansprüche, **dadurch gekennzeichnet, dass** das zweite maschinelle Klassifizierungsverfahren (120) ein Stützvektorverfahren ist, das in einer Trainingsphase eine Klassifizierung zwischen in Trainingsbildern enthaltenen Abbildungen einer Fasermaterialoberfläche und Fehlstellen auf der Fasermaterialoberfläche erlernt hat und das in einer Arbeitsphase in Abhängigkeit von digitalen Bilddaten als Eingabe in das Stützvektorverfahren eine Fehlstelle erkennt und die Art der Fehlstelle als Ausgabe klassifiziert.

7. Verfahren nach Anspruch 6, **dadurch gekennzeichnet, dass** bei dem zweiten Klassifizierungsverfahren (120) zunächst eine Merkmalsextraktion durchgeführt wird, bei der Bildmerkmale aus den generierten digitalen Bilddaten extrahiert werden, wobei diese Bildmerkmale als Eingabe in das Stützvektorverfahren eingegeben werden, um eine Fehlstelle zu erkennen und die Art der Fehlstelle als Ausgabe zu klassifizieren.

8. Verfahren nach Anspruch 7, **dadurch gekennzeichnet, dass** als Bildmerkmale ein Histogram of Oriented Gradients berechnet wird.

9. Verfahren nach einem der vorhergehenden Ansprüche, **dadurch gekennzeichnet, dass** eine Falte in dem Fasermaterial, eine Verdrehung des Fasermaterials, eine Überlappung benachbarter Fasermaterialien, Fremdkörper auf oder in der Fasermaterialoberfläche, eine Lücke zwischen benachbarten Fasermaterialien, Lufteinschlüsse, Materialablösungen des Fasermaterials von der darunterliegenden Schicht, Materialfehler des Fasermaterials und/oder Schnittfehler als Fehlstellen erkannt und klassifiziert werden.

10. Verfahren zum Ablegen von Fasermaterial eines Faserverbundwerkstoffes aufweisend das Fasermaterial und ein das Fasermaterial einbettende Matrixmaterial auf eine Werkzeugoberfläche (4), wobei mittels eines optischen Detektionssystems eine Fasermaterialoberfläche des abgelegten Fasermaterials erfasst und Fehlstellen an dem abgelegten Fasermaterial in Abhängigkeit von der erfassten Fasermaterialoberfläche erkannt und die Art der Fehlstelle klassifiziert werden, wobei während oder nach dem Ablegen des Fasermaterials Fehlstellen auf der Fasermaterialoberfläche des abgelegten Fasermaterials gemäß dem Verfahren nach einem der Ansprüche 1 bis 9 erkannt werden.

11. Anlage zum Ablegen von Fasermaterial eines Faserverbundwerkstoffes aufweisend das Fasermaterial und ein das Fasermaterial einbettende Matrixmaterial auf eine Werkzeugoberfläche (4), wobei die Anlage ein optisches Detektionssystem hat, das zum Erfassen einer Fasermaterialoberfläche des abgelegten Fasermaterials und zum Erkennen und Klassifizieren einer Fehlstelle auf der Fasermaterialoberfläche eingerichtet ist, wobei das optische Detektionssystem mindestens einen optischen Sensor zum optischen Erfassen der Fasermaterialoberfläche hat und eine elektronische Datenverarbeitungsanlage hat, die zum Erkennen und Klassifizieren einer Fehlstelle eingerichtet ist, wobei das optische Detektionssystem zum Erkennen einer Fehlstelle während oder nach dem Ablegen des Fasermaterials gemäß dem Verfahren nach einem der Ansprüche 1 bis 9 eingerichtet ist.

12. Anlage nach Anspruch 11, wobei die Anlage einen Bewegungsautomaten hat, an dem als Endeffektor ein Faserlegekopf zum automatisierten Ablegen des Fasermaterials auf der Werkzeugoberfläche (4) angeordnet ist.

## Claims

1. A method of detecting defects on a fiber material surface of a fiber material which is a component of a fiber composite material comprising the fiber material and a matrix material embedding the fiber material by an optical detection system, the method comprising the following steps:
- Detection of the fiber material surface of the deposited fiber material by means of at least one optical sensor of the optical detection system and generation of digital image data containing the detected fiber material surface;
- Performing a first machine classification method (110) based on the generated digital image data by means of an electronic data processing apparatus of the optical detection system, wherein the first machine classification method (110) detects defects in the digital image data containing the fiber material surface and classifies the type of defects as a detection result;
**characterized by**
- Performing at least one second machine classification method (120) different from the first machine classification method (110) based on the same generated digital image data by means of the electronic data processing apparatus of the optical detection system, wherein the second machine classification method (120) detects defects in the digital image data containing the fiber material surface and classifies the type of defects as a detection result;
- comparing the detection results (130) of the defect detection and/or intermediate results thereof of the first machine classification method (110) and the second machine classification method (120) by means of the electronic data processing apparatus;
- Detecting a defect and classifying the type of defect on the fiber material surface of the deposited fiber material depending on the comparison of the detection results (130) by means of the electronic data processing apparatus.

2. The method according to claim 1, **characterized in that** the first machine classification method (110) is an artificial neural network which, in a training phase, has learned a correlation between images of a fiber material surface contained in training images and defects on the fiber material surface and which, in a working phase, recognizes a defect based on digital image data as input to the artificial neural network and classifies the type of defect as output.

3. Method according to claim 2, **characterized in that** the artificial neural network is a convolutional neural network.

4. Method according to claim 2 or 3, **characterized in that** the digital image data generated by the optical sensor is reduced in terms of the number of pixels for input into the artificial neural network.

5. The method according to claim 4, **characterized in that** the digital image data is reduced to a size of 128 pixels x 128 pixels.

6. Method according to one of the preceding claims, **characterized in that** the second machine classification method (120) is a support vector method which, in a training phase, has learned a classification between images of a fiber material surface contained in training images and defects on the fiber material surface and which, in a working phase, recognizes a defect as a function of digital image data as input to the support vector method and classifies the type of defect as output.

7. The method according to claim 6, **characterized in that** in the second classification method (120), a feature extraction is first performed in which image features are extracted from the generated digital image data, said image features being input to the support vector method as input to detect a defect and classify the type of defect as output.

8. Method according to claim 7, **characterized in that** a histogram of oriented gradients is calculated as image features.

9. Method according to one of the preceding claims, **characterized in that** a fold in the fiber material, a twist of the fiber material, an overlap of adjacent fiber materials, foreign bodies on or in the fiber material surface, a gap between adjacent fiber materials, air inclusions, material detachment of the fiber material from the underlying layer, material defects of the fiber material and/or cutting defects are detected and classified as defects.

10. Method for depositing fiber material of a fiber composite material comprising the fiber material and a matrix material embedding the fiber material on a tool surface (4), wherein by means of an optical detection system a fiber material surface of the deposited fiber material is captured and defects on the deposited fiber material are detected as a function of the captured fiber material surface and the type of defect is classified, wherein defects on the fiber material surface of the deposited fiber material are detected during or after the depositing of the fiber material according to the method according to any one of claims 1 to 9.

11. A plant for depositing fiber material of a fiber composite material comprising the fiber material and a matrix material embedding the fiber material on a tool surface (4), the plant having an optical detection system adapted to capture a fiber material surface of the deposited fiber material and to detect and classify a defect on the fiber material surface, wherein the optical detection system has at least one optical sensor for optically capturing the fiber material surface and has an electronic data processing unit adapted to detect and classify a defect, wherein the optical detection system is adapted to detect a defect during or after the fiber material is deposited according to the method according to any one of claims 1 to 9.

12. The plant according to claim 11, wherein the plant has an automatic moving machine on which a fiber laying head is arranged as an end effector for the automated laying of the fiber material on the tool surface (4).

## Revendications

1. Procédé de détection de défauts sur une surface d'un matériau fibreux qui est un composant d'un matériau composite fibreux comprenant le matériau fibreux et un matériau de matrice qui incorpore le matériau fibreux, au moyen d'un système de détection optique, le procédé comprenant les étapes suivantes consistant à :
- enregistrer la surface du matériau fibreux déposé au moyen d'au moins un capteur optique du système de détection optique et générer des données d'image numériques incluant la surface de matériau fibreux enregistrée ;
- mettre en oeuvre un premier procédé de classification automatique (110), en se basant sur les données d'image numériques générées, au moyen d'une installation électronique de traitement de données du système de détection optique, le premier procédé de classification automatique (110) détectant des défauts dans les données d'image numériques représentant la surface du matériau fibreux et classifiant le type de défaut comme résultat de la détection ;
**caractérisé par** les étapes consistant à :
- mettre en oeuvre au moins un deuxième procédé de classification automatique (120) différent du premier procédé de classification automatique (110), en se basant sur les mêmes données d'image numériques générées, au moyen de l'installation électronique de traitement de données du système de détection optique, le deuxième procédé de classification automatique (120) détectant des défauts dans les données d'image numériques représentant la surface du matériau fibreux et classifiant le type de défaut comme résultat de la détection ;
- comparer les résultats de détection (130) de la détection des défauts et/ou des résultats intermédiaires du premier procédé de classification automatique (110) et du deuxième procédé de classification automatique (120) au moyen de l'installation électronique de traitement de données ;
- détecter un défaut et classifier le type de défaut sur la surface du matériau fibreux déposé en fonction de la comparaison des résultats de détection (130) au moyen de l'installation électronique de traitement de données.

2. Procédé selon la revendication 1,
dans lequel le premier procédé de classification automatique (110) est un réseau neuronal artificiel qui, dans une phase d'apprentissage, a appris une corrélation entre des représentations d'une surface de matériau fibreux contenues dans des images d'apprentissage et des défauts sur la surface de matériau fibreux et qui, dans une phase de travail, en fonction des données d'image numériques, détecte un défaut comme entrée dans le réseau neuronal artificiel et classifie le type de défaut comme sortie.

3. Procédé selon la revendication 2,
**caractérisé en ce que** le réseau neuronal artificiel est un réseau neuronal convolutif.

4. Procédé selon la revendication 2 ou 3,
**caractérisé en ce que** les données d'image numériques générées par le capteur optique sont réduites en ce qui concerne le nombre de pixels pour l'entrée dans le réseau neuronal artificiel.

5. Procédé selon la revendication 4,
**caractérisé en ce que** les données d'image numériques sont réduites à une taille de 128 pixels x 128 pixels.

6. Procédé selon l'une des revendications précédentes,
**caractérisé en ce que** le deuxième procédé de classification automatique (120) est un procédé à vecteur position qui, dans une phase d'apprentissage, a appris une classification entre des représentations d'une surface de matériau fibreux contenues dans des images d'apprentissage et des défauts sur la surface de matériau fibreux et qui, dans une phase de travail, en fonction des données d'image numériques, détecte un défaut comme entrée dans le procédé à vecteur position et classifie le type de défaut comme sortie.

7. Procédé selon la revendication 6,
**caractérisé en ce que**, dans le deuxième procédé de classification (120), il se produit d'abord une extraction de caractéristiques dans laquelle des caractéristiques d'image sont extraites des données d'image numériques générées, ces caractéristiques d'image étant entrées en tant qu'entrée dans le procédé à vecteur position pour détecter un défaut et classifier le type de défaut comme sortie.

8. Procédé selon la revendication 7,
**caractérisé en ce qu'**un histogramme de gradient orienté est calculé comme caractéristiques d'image.

9. Procédé selon l'une des revendications précédentes,
**caractérisé en ce qu'**un pli dans le matériau fibreux, une torsion du matériau fibreux, un chevauchement de matériaux fibreux adjacents, des corps étrangers sur ou dans la surface du matériau fibreux, un interstice entre des matériaux fibreux adjacents, des inclusions d'air, des décollements de matériau fibreux de la couche sous-jacente, des défauts matériels du matériau fibreux et/ou des défauts de coupe sont détectés comme des défauts et classifiés.

10. Procédé pour déposer sur une surface d'outil (4) un matériau fibreux d'un matériau composite fibreux comprenant le matériau fibreux et un matériau de matrice qui incorpore le matériau fibreux,
dans lequel une surface du matériau fibreux déposé est enregistrée au moyen d'un système de détection optique, et des défauts sur le matériau fibreux déposé sont détectés en fonction de la surface de matériau fibreux enregistrée, et le type de défaut est classifié,
pendant ou après la dépose du matériau fibreux, des défauts sur la surface du matériau fibreux déposé sont détectés par le procédé selon l'une des revendications 1 à 9.

11. Installation pour déposer sur une surface d'outil (4) un matériau fibreux d'un matériau composite fibreux comprenant le matériau fibreux et un matériau de matrice qui incorpore le matériau fibreux, l'installation comprenant un système de détection optique agencé pour enregistrer une surface du matériau fibreux déposé et pour détecter et classifier un défaut sur la surface de matériau fibreux, le système de détection optique comprenant au moins un capteur optique pour enregistrer optiquement la surface de matériau fibreux et comprenant une installation électronique de traitement de données adapté pour détecter et classifier un défaut,
dans laquelle le système de détection optique est adapté pour détecter un défaut pendant ou après la dépose du matériau fibreux par le procédé selon l'une des revendications 1 à 9.

12. Installation selon la revendication 11,
dans laquelle l'installation comporte un automate de déplacement sur lequel est disposée, en tant qu'effecteur terminal, une tête de dépose de fibres pour déposer de façon automatisée le matériau fibreux sur la surface d'outil (4).
